Europäisches Patentamt

**(19)** European Patent Office

Office européen des brevets

**(11)** Publication number : **0 145 417 B2**

**(12)** NEW EUROPEAN PATENT SPECIFICATION

**(45)** Date of publication of the new patent
specification : **26.08.92 Bulletin 92/35**

**(51)** Int. Cl.$^5$ : **B22F 3/14**

**(21)** Application number : **84308297.5**

**(22)** Date of filing : **29.11.84**

**(54) Hot isostatic pressing.**

**(30)** Priority : **29.11.83 JP 226155/83**

**(43)** Date of publication of application :
**19.06.85 Bulletin 85/25**

**(45)** Publication of the grant of the patent :
**08.03.89 Bulletin 89/10**

**(45)** Mention of the opposition decision :
**26.08.92 Bulletin 92/35**

**(84)** Designated Contracting States :
**DE GB**

**(56)** References cited :
**DE-A- 3 239 316**
**FR-A- 2 101 565**
**FR-A- 2 352 585**

**(56)** References cited :
**JP-A- 488 689**
**JP-A- 5 871 301**
**JP-U- 5 954 098**
**JP-U-58 157 300**
**US-A- 3 606 286**
**US-A- 4 217 087**
**US-A- 4 349 333**

**(73)** Proprietor : **KABUSHIKI KAISHA KOBE SEIKO
SHO**
**3-18 Wakinohama-cho 1-chome Chuo-ku
Kobe 651 (JP)**

**(72)** Inventor : **Ishii, Takahiko**
**3-37-4 Kitaochiai**
**Suma-ku Kobe (JP)**

**(74)** Representative : **Wright, Hugh Ronald et al
Brookes & Martin 52/54 High Holborn
London WC1V 6SE (GB)**

EP 0 145 417 B2

## Description

The present invention relates to an improvement in hot isostatic pressing (hereinafter referred to as "HIP") method and apparatus (particularly of the type referred to as modular HIP which is provided with auxiliary stations). HIP is commonly used for sintering or densifying ceramic or metallic powder at high temperature and pressure in an inert gas atmosphere to obtain a moulded product having a dense texture of a high density.

Recently HIP treatment has been specially noted in various fields as a superior method for compressing a workpiece isotropically at a high temperature using an inert gas as a pressure medium to produce a dense sinter from ceramic powder, metallic powder, or a mixture thereof, or for removing residual cavities in cemented carbides by squeezing, or for diffusion-bonding of metallic materials.

There are various advantages in the HIP method such as, for example, high densification at low temperature, obtaining of a dense and uniform texture having a density close to a maximum theoretical value, improvement of mechanical and physical properties of powder, moulding of powder otherwise unsuitable for moulding, production of large-sized products not restricted by the capacity of a press as in ordinary moulding presses, moulding of various composite materials such as metals and ceramics, and improvement of the material yield. By a HIP treatment, moreover, internal defects of an object can be removed, and the toughness and deflective strength can be enhanced, so it has also been proposed to use HIP for processes other than the above-mentioned powder moulding and sintering, such as improvement of the performance of sintered tool material etc. and diffusion-bonding of turbine blades and bodies to obtain an extremely strong bond.

Since such HIP treatment is performed in an atmosphere of high temperature and pressure, it is necessary to use a special HIP furnace, and a long time is required for executing the operation cycle comprising raising temperature, raising pressure, maintaining the elevated temperature and pressure, lowering temperature and lowering pressure. Therefore, shortening this cycle time and thereby improving the efficiency has been an important technical problem.

In an effort to solve the above-mentioned problem, various attempts have been made for improving the utilisation efficiency per unit time of the HIP furnace by performing, in a preheating furnace, the initial heating so as to raise the temperature of the workpiece which requires a long time and performing in the HIP furnace only the raising of the pressure and/or raising the temperature to a slight extent. A typical example is the apparatus proposed in the specification of British Patent no. 1,291,459. But, this proposed apparatus is disadvantageous in that (a) the equipment cost is increased because a preheating furnace is needed in addition to the ordinary HIP furnace although a shortening of the cycle time is attained, (b) the heat loss caused by heat radiation from the workpiece is very large because the workpiece is conveyed after preheating in the air, and (c) when the high-temperature workpiece after preheating is charged into the HIP furnace, the lower inner wall surface of the furnace is overheated and the lower seal ring is easily damaged thereby, which is a serious problem.

In this type of apparatus for which strict safety is required, the adoption of the above mentioned apparatus is very problematic even if the cycle time is shortened.

The material used to make the electric heating element in the HIP furnace is usually Fe-Al-Cr, molybdenum of graphite. Among these materials, Fe-Al-Cr, which is resistant to oxidation at high temperatures, has been evaluated as the only material capable of being exposed to the air at a high temperature, but the temperature at which this material can be used stably is only up to about 1100°C.

On the other hand, molybdenum or graphite based materials which are stable in use above 1100°C are severely oxidised at high temperatures, so cannot safely be exposed to the air unless the temperature range is below about 200-300°C. Therefore, it is necessary to lower the temperature to below 300°C which takes a long time although the lowering of pressure can be done in a relatively short time after performing the HIP treatment at a temperature as high as one thousand and several hundred degrees Celsius in a high pressure inert gas atmosphere. Thus, the long time required from opening the HIP furnace until taking out the workpiece greatly impedes the efficient utilisation of the apparatus. As an example, according to a certain conventional typical pattern in the HIP treatment, the time required for each treating step is as follows:

| Step | Time required | |
|---|---|---|
| | hr. | min. |
| Loading of workpiece | 0 | 10 |
| Vacuum suction, gas injection | 1 | 00 |
| Raising temperature, raising pressure | 3 | 00 |
| Maintaining elevated temperature and pressure | 2 | 00 |
| Lowering temperature | 8 | 00 |
| Recovery under reduced pressure | 1 | 00 |
| Removal of workpiece | 0 | 10 |
| Total | 15 | 20 |

By the foregoing proposals, preheating, the 3 hours' temperature and pressure raising time is shortened to about 1 hour and 40 minutes, corresponding to only 8.7% reduction of the cycle time. The time required for lowering the temperature, which occupies the greater part of the cycle time, still remains as a factor which seriously impedes efficiency.

To shortening the time required for lowering temperature, natural cooling has been tried by providing a coolant jacket around the outer periphery of the HIP furnace and utilising, in lowering the temperature, convection of gas induced by the difference between the low specific gravity of the high temperature gas at the centre of the furnace and the larger specific gravity of the low temperature gas in contact with the furnace inner wall, as disclosed, for example, in the specification of US Patent no. 4,217,087 and Japanese Patent Publication no. 8689/1973. In such a method, however, the cooling rate deteriorates to a large extent with decrease of the temperature difference between the high temperature gas and the low temperature gas. Therefore, the temperature lowering rate becomes less as the cooling continues and there is not a remarkable shortening of the time required until reaching the temperature at which the HIP furnace can be opened.

The applicant of the present invention has previously proposed (see Japanese Patent Laid Open Publication no. 71301/1983) an HIP system capable of shortening the cycle time without exerting a bad influence on its components and having a high safety, as well as a method capable of remarkably improving the working efficiency. This proposed HIP system, called a modular type HIP system, comprises an HIP furnace, a plurality of auxiliary stations, the HIP apparatus and the auxiliary stations being disposed side by side along and above a horizontally laid track, and a carriage for travelling on the track. The HIP apparatus consists mainly of a high pressure vessel and a treatment chamber and is provided with means for supply and discharge of an atmospheric gas for applying HIP treatment to a workpiece whilst mounted in the treatment chamber and is also provided with means for adjusting the pressure and temperature, the high pressure vessel comprising a pressure-resistant vertical cylinder having a closed top and open bottom, the treating chamber being removably fitted in the bottom of the cylinder, the treatment chamber being enclosed with an inverted cup-like heat insulating barrier which barrier is mounted on the upper surface of a plug and is internally provided with a heater. Each of the auxiliary stations comprises a dome-like vessel having a size which permits the treatment chamber to be completely enclosed therein, also having a bottom opening which permits the above plug to be fitted therein, and further having a coolant jacket provided around the outer periphery thereof. Each auxiliary station is also provided with the heater enclosed therein together with the treatment chamber, means for supply and discharge of an atmosphere gas for heating or cooling the work and temperature adjusting means.

Thereafter, the applicant of the present invention has made various improvements on the above proposed apparatus and filed Patent Applications for the thus-improved apparatus (see Japanese Utility Model Laid Open Publication nos. 157300/1983 and 54098/1984). According to these improvements, in the foregoing modular type HIP system, a single valve mechanism is provided in the upper or lower portion of a casing which houses the treatment chamber. This valve mechanism is opened when the treatment chamber is inserted into the HIP furnace or an auxiliary station, to thereby provide communication between the interior and exterior of the treatment chamber, and it is closed when the treatment chamber is taken out. According to this construction, it is possible to remove the workpiece which has been preheated in the auxiliary station, from the auxiliary station integrally with the treatment chamber together with the inert atmospheric gas, convey and load the workpiece into the HIP furnace, then after HIP treatment and upon dropping of pressure, take out the workpiece from the HIP furnace integrally with the treatment chamber immediately without waiting for it to cool, and cool it in an auxiliary station. Thus a remarkable shortening of the cycle time in the HIP treatment and a great improvement of the working efficiency could be attained. In these devices, however, since the casing which hermetically encloses the treatment chamber is taken out from the HIP furnace whilst at a high temperature, there arises the foregoing serious problem that the seal ring attached to the lower portion of the high pressure vessel is easily damaged when opening the HIP furnace whilst still hot and taking out the treatment chamber whilst at a high temperature.

The present inventors have carefully reviewed the foregoing prior art and studied the method of ensuring an efficient and safe operation of the entire system while making the most of the advantages of the modular type of HIP system without impairing the utilisation efficiency of the HIP furnace.

In respect of the prior art, reference should also be made to French Patent Specification 2 352 585A and US-A-3 606 286, which disclose convective cooling in HIP furnaces.

The present invention provides a process for high efficiency hot isostatic pressing for sintering or densifying a ceramic or metallic workpiece in a high temperature and high pressure gas atmosphere comprising mounting the workpiece in a hermetic casing, preheating the workpiece inside said hermetic casing outside a high pressure vessel prior to the hot isostatic pressing treatment, transferring the preheated workpiece and hermetic casing to the high pressure vessel, communicating the interior of the hermetic casing with a high pressure gas atmosphere whereby the workpiece is hot isostatically pressed at a high temperature and in a high pressure gas atmosphere, characterised in that the high pressure gas atmosphere is at least 5.07 x $10^7$Pa (500 atmospheres), the workpiece is convectively cooled whilst mounted in the hermetic casing within the high pressure vessel by causing said high pressure gas at a pressure of at least 5.07 x $10^7$Pa (500 atmospheres) to circulate from within the hermetic casing to a relatively cool portion of the high pressure vessel outside the hermetic casing and back within the hermetic casing, lowering the pressure within said vessel and further cooling the workpiece remote from the high pressure vessel by removing the workpiece from the high pressure vessel whilst hermetically sealed in said hermetic casing.

The present invention also provides an apparatus for high efficiency hot isostatic pressing for sintering or densifying a ceramic or metallic workpiece in a high temperature and high pressure gas atmosphere comprising,

a hot isostatic pressing furnace comprising a high pressure vessel in the form of a vertical pressure-resistant cylinder having one closed end and a plug removably closing an open other end of said cylinder; and

a treatment chamber surrounded by a heat insulating barrier and adapted to be loaded into and unloaded from said high pressure vessel with a preheated workpiece enclosed therein, said heat insulating barrier being provided internally with a heater,

said hot isostatic pressing furnace having a gas supply and discharge means for isostatically pressing said workpiece by subjecting it to a predetermined high temperature and high pressure treatment in a gas atmosphere,

said treatment chamber including a hermetic casing including valve means for providing communication between the interior and exterior of said treatment chamber,

characterised in that at least one openable and closable valve means is provided in each of the upper and lower portions of the treatment chamber whereby whilst said treatment chamber is being loaded into the high pressure vessel, it is hermetically sealed by maintaining all said valve means closed,

means being provided

to open at least one of said valve means whilst the treatment chamber is in the furnace whereby said high pressure gas is applied to said workpiece,

to thereafter open all said valve means after said hot pressing whilst the treatment chamber is still in the furnace whereby gas circulates from within the treatment chamber to a relatively cool portion of the high pressure vessel and back within the treatment chamber to cool the workpiece and

to thereafter close all of said valve means so that said treatment chamber may be removed from said high pressure vessel whilst maintaining said treatment chamber hermetically closed.

The present invention also provides an apparatus for high efficiency hot isostatic pressing for sintering or densifying a ceramic or metallic workpiece in a high temperature and high pressure gas atmosphere in a modular type hot isostatic pressing system comprising:

a hot isostatic pressing furnace comprising a high pressure vessel comprising a vertical, pressure-resisting cylinder having one closed end and a plug removable closing an open other end of said cylinder and a treatment chamber surrounded by a heat insulating barrier and adapted to be loaded into and unloaded from said high pressure vessel with a workpiece enclosed therein, said heating insulating barrier being provided internally with a heater; said hot isostatic pressing furnace having a gas supply and discharge means for isostatically pressing said workpiece by subjecting it to a predetermined high temperature and high pressure treatment in a gas atmosphere;

an auxiliary station substantially comprising a vertical cylinder adapted so as, in use, to enclose therein and hermetically seal said treatment chamber, said auxiliary station having a gas supply and discharge means; and a carrier apparatus for carrying said treatment chamber together with the workpiece between said hot isostatic pressing furnace and said auxiliary station and loading and unloading it into and from the vertical cylinders of said furnace and said auxiliary station,

said treatment chamber is covered with a hermetic casing and includes a valve mechanism capable of providing selective communication between the interior and exterior of said treatment chamber,

characterised in that there is provided at least one openable and closeable valve mechanism in each of upper and lower portions of the treatment chamber whereby whilst said treatment chamber is being loaded into the high pressure vessel, it is hermetically sealed by maintaining ail :aid valve means closed,

means being provided

to open at least one of said valve means whereby said high pressure gas is applied to said workpiece during hot pressing,

to open all said valve means after said hot pressing whilst the treatment chamber is still in the furnace whereby gas circulates from within the treatment chamber to a relatively cool portion of the high pressure vessel and back within the treatment chamber to cool the workpiece and

to thereafter close all of said valve means so that said treatment chamber may be removed from said high pressure vessel whilst maintaining said treatment chamber hermetically closed.

## BRIEF DESCRIPTION OF THE DRAWINGS

Figure 1 is a schematic view of a modular type HIP system embodying the present invention;

Figures 2 to 5 are schematic views showing structures and operations of various parts shown in Figure 1, of which Figure 2 is a schematic view of the treatment chamber per se, Figure 3 is a schematic view of the treatment chamber received in an auxiliary chamber, Figure 4 is a schematic view of the treatment chamber received in a HIP furnace and under HIP treatment and Figure 5 is a schematic view of the furnace; and

Figure 6 is a schematic view of an HIP apparatus according to a modified embodiment of the present invention.

The method and apparatus of the present invention will be described in detail hereinunder with reference to the accompanying drawings.

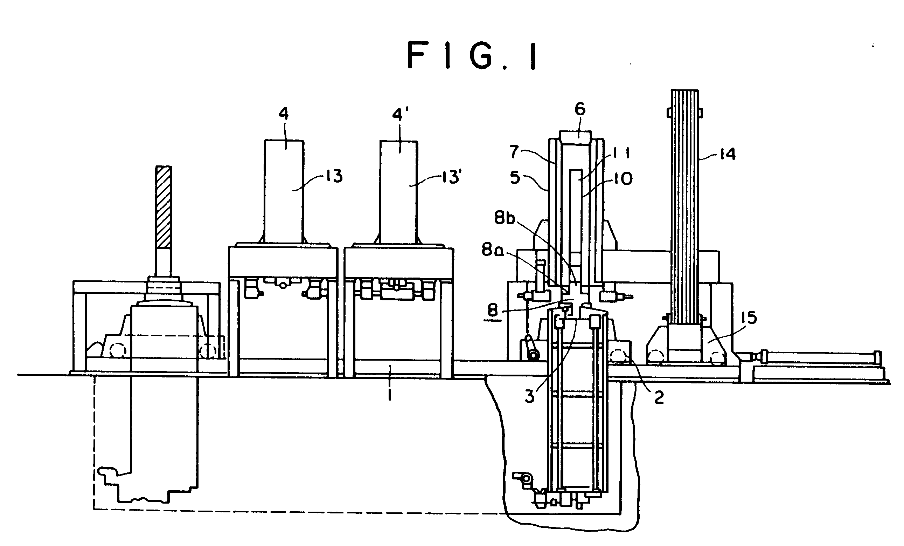

Figure 1 is a schematic explanatory view showing the positional relation between a HIP furnace and auxiliary stations in a modular type HIP system according to an embodiment of the present invention, in which a carriage 2 is mounted for travelling on a track 1, and on the carriage 2 is mounted a support table 3 capable of being vertically moved by a known or commonly used drive means (not shown) such as, for example, a chain wind-up type, worm gear and rack type, or piston type drive means. Above and along the track 1 are disposed side by side a plurality of auxiliary stations 4, 4'... and a HIP furnace 5. The HIP furnace 5 comprises a high pressure vessel comprising a vertical, pressure-resistant cylinder 7 having a top portion closed hermetically with an upper plug 6 and a lower plug 8 capable of being fitted hermetically and removably in the bottom of the cylinder 7 and a treatment chamber 11 surrounded with an inverted cup-like heat insulating barrier 10 which is mounted on the upper surface of the lower plug 8 and enclosed in the high pressure chamber which is internally provided with a heater. The treatment chamber 11 can be removed from the interior of the HIP furnace 5 by removing the heat insulating barrier 10 and the lower plug 8 together from the pressure-resistant cylinder 7. On the other hand, the auxiliary stations 4, 4', ... mainly comprise vertical cylinders 13, 13' ... and they each have capacity and size sufficient to completely enclose therein the treatment chamber 11. The bottom opening of each of the vertical cylinders 13, 13',... has a size and shape which permit the lower plug 8 to be fitted therein.

The treatment chamber 11, which is mounted on the support table 3 of the carriage 2, can be positioned just under the vertical, pressure-resistant cylinder 7 or any of the vertical cylinders 13, 13', ... by movement of the carriage 2, and can be inserted into or removed from the vertical cylinder 7, 13, or 13' in that position by operation of a lift means. A press frame 14 for grippingly supporting the upper plug 6 and the lower plug 8 is mounted on a carriage 15 and can travel on the track 1 and reciprocate between operating and retracted positions. The illustrated construction of the press frame 14 is mere example, and various modifications may be made. For example, it may be hinged to a vertical fixed shaft and reciprocated between operating and retracted positions by a pivotal motion thereof.

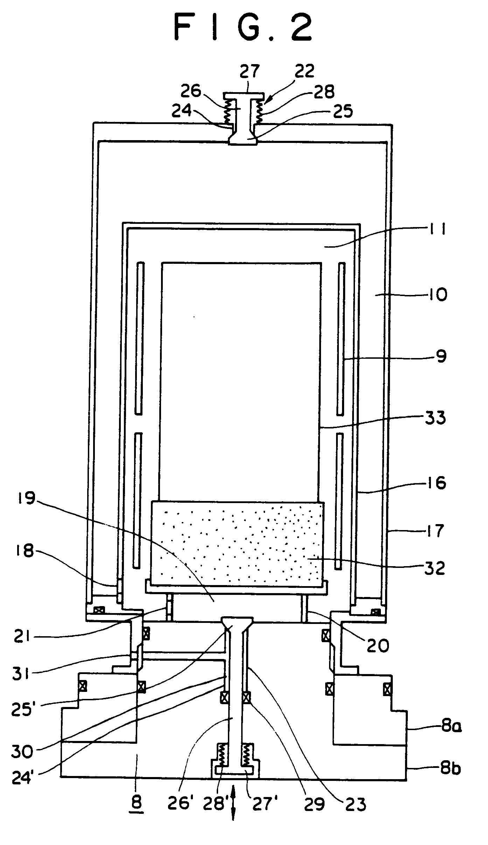

Figure 2 is a schematic vertical section of the treatment chamber 11 as a constituent member of the system of Figure 1, in which a heat insulating barrier 10 internally provided with a heater 9 comprising an electrically insulated electric heating plate is mounted on the upper surface of the lower plug 8. The power supply to the heater 9 is effected through a power lead wire (not shown) which is attached to the lower plug 8 in an electrically insulated and hermetically sealed manner. The heat insulating barrier 10 surrounding the treatment chamber 11, including the heater 9, is formed of a heat-resistant fibrous heat insulator such as ceramic fibre filled between substantially concentric inverted cup-like hermetic casings 16 and 17 formed of a gas impermeable material. The heat insulating barrier 10 is gas permeable and it is removably mounted on the upper surface of the lower plug 8.

The heat insulating barrier 10 and the treatment chamber 11 are in communication with each other through a through hole 18 formed in part of the hermetic casing 16. The upper surface of the lower plug 8 is covered with a heat insulating seat 19 of a similar structure to the heat insulating barrier 10, and a hermetic casing 20 which forms an outer periphery of the heat insulating seat 19 is also formed with a through hole 21 to provide communication between the seat 19 and the treating chamber 11.

Further, the present invention includes at least one valve mechanism in each of upper and lower portions of the treatment chamber 11 thereby permitting selective communication between the interior and exterior of the treatment chamber 11. In the illustrated embodiment, valve mechanisms 22 and 23 are provided in the top of the hermetic casing 17 and in the lower plug 8, respectively. But it goes without saying that plural such valve mechanisms may be provided in each of those portions.

The valve mechanism 22 comprises a valve 25 for opening and closing a valve hole 24 formed in the top of the hermetic casing 17 from the treatment chamber 11 side, a stem 26 contiguous to the valve 25 and inserted slidably in the valve hole 24, and a flange 27, a spring 28 being interposed between the flange 27 and the hermetic casing 17. The stem 26 is urged upward by the biasing force of the spring 28. In the lower valve mechanism 23, which is of similar construction, a seal ring 29 is disposed in an intermediate portion of a valve bore 24' to prevent communication between the treatment chamber 11 and the outside air when a valve 25' is opened. The diameter of the valve bore portion above the seal ring 29 is a little larger than the outside diameter of a stem 26' to form an annular hole 30, and the treatment chamber 11 communicates with the outside at the upper side of the lower plug 8 through a conduction hole 31 extending sideways from the annular hole 30. The valves 25 and 25' are opened by urging the respective flanges 27 and 27' against the biasing force of springs 28 and 28' and are closed by the biasing force of the springs 28 and 28'.

In use of the modular type HIP system of the invention having the above construction, the heat insulating barrier 10 is first separated from the lower plug 8 together with the hermetic casings 16 and 17 to open the treatment chamber 11, then a workpiece 33 is put on a sample stand 32, and thereafter the heat insulating barrier 10 is fixed onto the lower plug 8 to close the treatment chamber 11. In this way, preparations are completed. The treatment chamber 11 thus loaded with the workpiece 33 is then inserted into the vertical cylinder 13 of the auxiliary station 4.

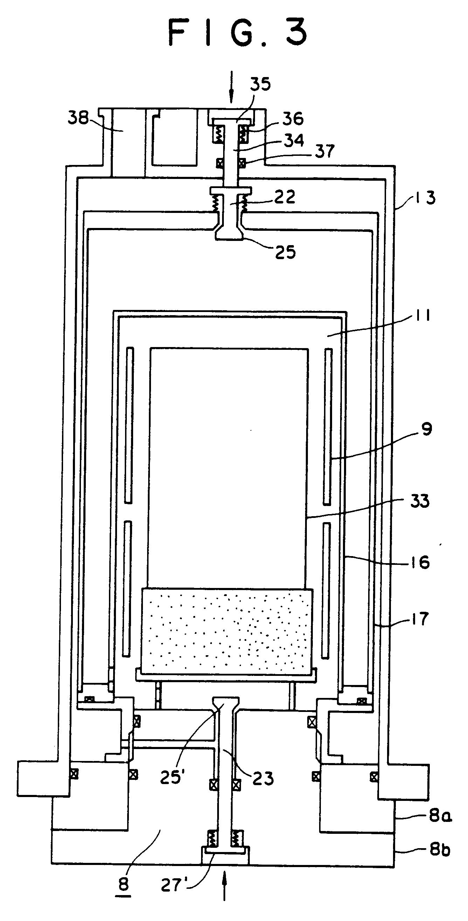

Figure 3 is a schematic vertical section of the treatment chamber 11 as received in the auxiliary station 4, in which a push rod 34 is provided in the top of the vertical cylinder 13 in a position coaxial with the valve mechanism 22, and the push rod 34 is urged upward by the biasing force of a spring 36 which acts on an upper end flange 35, the push rod 34 being mounted hermetically through a seal ring 37. Further, the vertical cylinder 13 is provided with a gas supply and discharge port 38 which communicates with a vacuum exhaust system and a gas supply/discharge system (neither shown).

In such auxiliary station 4, the workpiece 33 is first subjected to a required heat treatment. For example, in vacuum sintering of a formed body of powder, the flanges 27' and 35 are push by suitable means to open the upper and lower valves 25 and 25', as shown in Figure 3, then electricity is passed through the electric heater 9 while vacuum suction is applied through the gas supply and discharge port 38. Optionally thereafter the vacuum may be replaced with an inert gas such as argon or nitrogen. In either case, the upper and lower valves 25 and 25' are then closed to seal the inert gas in the hermetic casing 17, thereby performing an atmospheric sintering, i.e. a sintering in the presence of gas rather than vacuum. In the case of oxide type ceramics, there may be used a gaseous mixture consisting of an inert gas such as

Ar or $N_2$ and a very small amount of $O_2$.

After completion of the above heat treatment, and where the interior of the treatment chamber 11 is vacuum, after replacing it with a predetermined gas, the lower plug 8 is removed from the lower opening of the vertical cylinder 13 together with the workpiece 33, treatment chamber 11 and hermetic casings 16 and 17, which are then transferred to the HIP furnace whilst the treatment chamber 11 is still hot and inserted into the furnace interior from the lower opening of the vertical pressure-resistant cylinder 7. During their transfer, both the upper and lower valves 25 and 25' are closed as shown in Figure 2, and the interior of the treatment chamber 11 is maintained in the predetermined gas atmosphere. Therefore, materials which are susceptible to oxidation at elevated temperatures but which may be stably employable at elevated temperatures in a non-oxidative atmosphere can be used for the heating element etc.

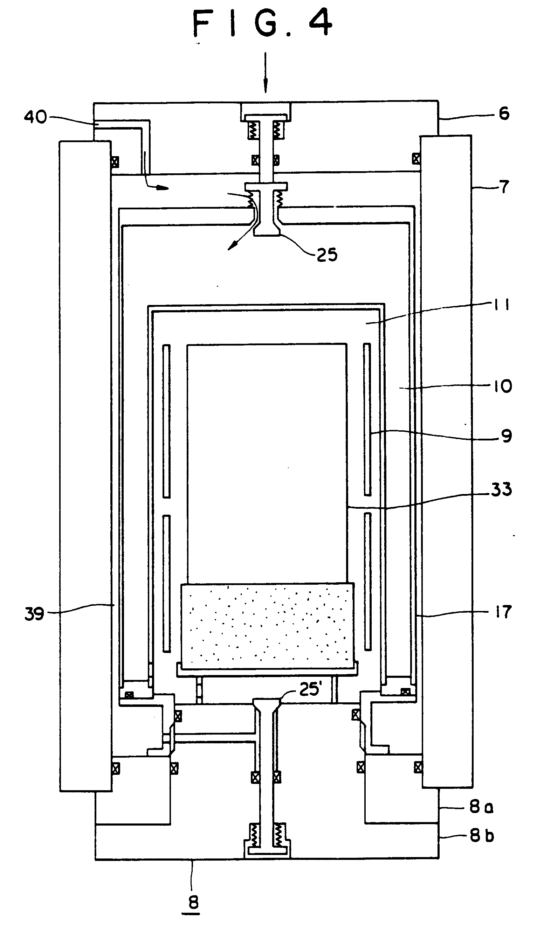

Figure 4 is a schematic vertical section of the treatment chamber 11 as received in the vertical pressure-resistant cylinder 7 of the HIP furnace 5, in which the HIP furnace 5 comprises the cylinder 7 and the upper plug 6 which seals the upper end of the cylinder 7, with the lower plug 8 being hermetically fitted in the lower end of the cylinder 7, thereby forming a high pressure chamber 39 in the interior of the cylinder.

In the upper plug 6 is formed a gas flowing path or conduit 40 for supply and discharge of a gaseous pressure medium. In the illustrated embodiments the vertical pressure-resistant cylinder 7 is supported and fixed by a support structure (not shown), and the upper and lower plugs 6 and 8 are gripped to the press frame 14 to prevent their disengagement during operation. The plugs may be fixed to the pressure-resistant cylinder by conventional means such as a threaded engagement, but the press frame gripping method is preferred from the standpoint of ensuring safety in operation at high pressures.

In the apparatus of such structure, the treatment chamber 11 whose interior is still hot is inserted into the vertical pressure-resistant cylinder 7 by fitting the lower plug 8 which carries thereon the treatment chamber 11 hermetically into the lower end of the cylinder 7. The valve 25 is then opened and the valve 25' closed, and the gaseous pressure medium is introduced through the conduit 40 into the pressure chamber 39, while the heater 9 is switched on to continue the heating and raise the internal temperature of the furnace to thereby perform a HIP treatment.

The pressurisation is effected at a high pressure of at least $5.07 \times 10^7$ Pa (about 500 atm) using a gaseous pressure medium comprising an inert gas such as argon or helium gas alone or in combination with a small amount of oxygen, and at a high temperature sufficient to cause a plastic flow of the constituent material of the work such as ceramics or metal. In the method of the present invention, the temperature range of about 1,200 to 2,000°C is used in the high temperature HIP treatment. By this HIP treatment, the density of the workpiece is increased and there is obtained a formed body of a high density close to the maximum theoretical density.

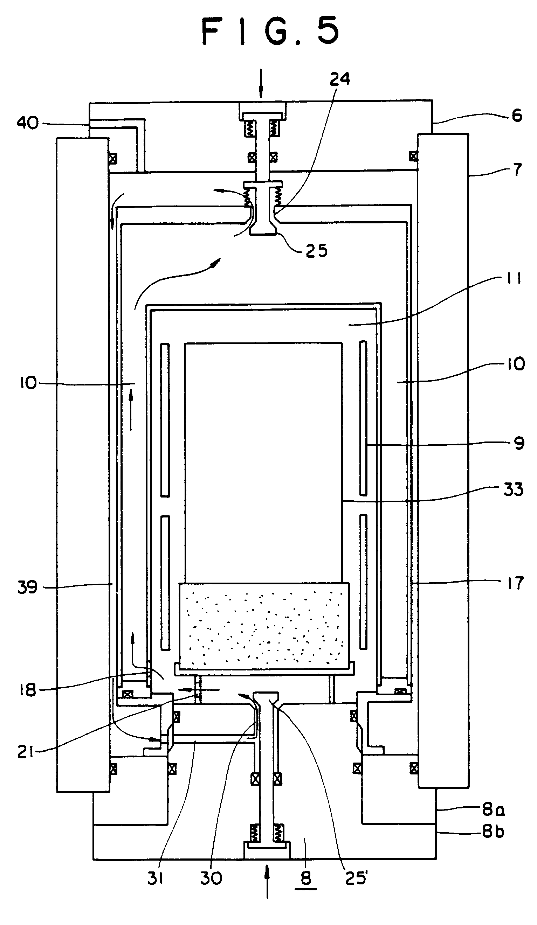

Figure 5 is a schematic vertical section showing a forced cooling step which is carried out in the HIP furnace after completion of the HIP treatment. As shown in the figure, upon completion of the HIP treatment, the lower valve 25′ is opened without reducing pressure, and now both the upper and lower valves are open, whereby a circulating gas stream is created by convection of gas along the arrowed path in the figure. More particularly, the gas in the high pressure chamber 39 which has been cooled in contact with the inner wall of the vertical pressure-resistant cylinder 7 flows downwards, then passes through the conduction hole 31, annular hole 30 and through hole 21 and enters the treatment chamber 11, where it absorbs the heat within, then passes through the hole 18 and heat insulating barrier 10 and again flows into the high pressure chamber 39 from the valve hole 24 and radiates heat to the inner wall of the vertical pressure-resistant cylinder 7.

According to the conventional HIP method, not modular type, the interior of the HIP furnace must be cooled to a temperature which permits opening to the outside air, namely, about 200°C or lower, and as the temperature lowers, the cooling rate becomes smaller, as reflected in a long time of about 8 hours required for the cooling operation. After the adoption of a modular type HIP method, it became possible to only reduce the pressure after the HIP treatment, before transferring the treatment chamber whilst still hot to an auxiliary station and cool it to a predetermined temperature in that station. However, since there is only minor convection of gas at or about atmospheric pressure, a long time is required for cooling, for example, about 10 hours is required for lowering the temperature from 600°C to 300°C. Consequently, it is necessary to increase the number of auxiliary stations sufficiently to improve the utilisation efficiency of the HIP furnace, or else forced cooling must be provided at the auxiliary stations, thus leading to of increase the equipment cost. Additionally, the seal ring of the HIP furnace is apt to be damaged because the treatment chamber is removed whilst still hot and this is a serious problem.

On the other hand, according to the foregoing method of the present invention, cooling is carried out under high pressure after the HIP treatment, by vigorous convection of the gas, whereby the heat is absorbed rapidly and the workpiece is cooled in a surprisingly short time. For example, in the case of argon at a pressure of 1,000 kg/cm², its viscosity is only 1.1 to 3 times that of argon gas at the atmospheric pressure although the high pressure argon has a density several hundred times that of the latter, so a slight temperature gradient causes a vigorous convection, giving an extremely large value of convective heat conductivity, that is, the conduction efficiency from the workpiece to the intra-furnace atmosphere is very high. Actually, only one hour was required to lower the temperature from 600°C to 300°C in a high pressure argon gas atmosphere of 1000 kg/cm².

Preferably, the rapid cooling in the HIP furnace according to the method of the present invention is carried out until the temperature of the workpiece is not higher than about 300°C. After completion of the cooling step, the gaseous pressure medium is discharged from the conduit 40 to let the internal pressure of the furnace revert to normal pressure, then the press frame 14 is removed and the lower plug 8 is removed from the pressure-resistant cylinder 7 whilst the upper and lower valves 25 and 25′ are closed, then taken out from the HIP furnace 5 together with the treatment chamber 11 and the workpiece 33 loaded therein and inserted in the auxiliary station 4. In this case, since the temperature of the hermetic casing 17 which enclosed the treatment chamber 11 is also fully low, the seal rings and other portions of the vertical cylinders 7, 13 and 13′ of the HIP furnace 5 and auxiliary stations 4, 4′ will not be badly affected during mounting or removal. After further cooling as necessary in the auxiliary station 4, the workpiece 33 is taken out of the treatment chamber 11.

In the HIP system of the present invention, a coolant jacket may be mounted around the outer periphery of the vertical pressure-resistant cylinder 7 of the HIP furnace 5 to further increase the cooling rate, and similar coolant jackets may be mounted around the outer peripheries of the vertical cylinders 13 and 13′ of the auxiliary stations 4 and 4′ to cause a forced circulation of the inside gas. The provision of these means is desirable for further improving the function and effect of the method of the present invention although the equipment cost will be increased.

The lower plug 8 of an improved type used in the present invention will now be described with reference to Figures 1 to 5. As shown in these figures, the lower plug of this type comprises an outer annular plug 8a which holds thereon the hermetic casings 16 and 17, heat insulating barrier 10 and heater 9, and an inner plug 8b which is removably fitted in the outer annular plug 8a and which supports the work 33 through the heat insulating seat 19, and sample stand 32.

Under such construction, at every loading or unloading of the work it is no longer necessary to remove the treatment chamber 11 from the auxiliary station 4 and then separate the heat insulating barrier 10 from the lower plug 8; in other words, all that is required is to remove the inner plug 8b from the outer plug 8a while the treatment chamber is received in the auxiliary station 4, and thus the operation is extremely easy, affording a great convenience. Where the lower plug 8 is of such a double structure, it is preferable from the point of design and manufacture that the inner plug 8b be provided in the lower valve mechanism 23.

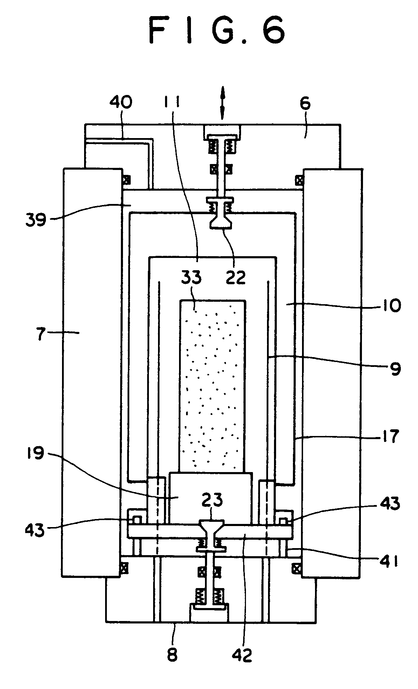

Figure 6 is a schematic vertical section of a HIP apparatus according to another embodiment of the present invention. In the above embodiment illustrated in Figures 1 to 5, the heat insulating barrier 10, heater 9 and workpiece 33 can be loaded and unloaded from the lower openings of the vertical cylinders 7, 13 and 13' together with the lower plug 8. On the other hand, in the embodiment of Figure 6, the upper plug 6 is removed thereby permitting those parts to be loaded and unloaded from the upper openings of the vertical cylinders 7, 13, 13'. As shown, a base plate 42 which serves as a part of the hermetic casing 17 is put on the lower plug 8 through support 41, and the lower end of the hermetic casing 17 is put on the base plate 42 through a seal ring 43. Further, the valve member 23 for communication and cut-off between the interior and exterior of the treatment chamber 11 is mounted in the base plate 42. In this apparatus, the heat insulating barrier 10, heater 9, workpiece 33 and base plate 42 are loaded and unloaded together from above the vertical cylinder in an integrally suspended state.

The heater 9, comprises Ni-Cr wire, Fe-Cr-Al wire, molybdenum wire or graphite, selected according to the temperature used. But, molybdenum and graphite are most preferred from the standpoint of stability of operation at high temperatures. The materials of the hermetic casings 16, 17 and 20, comprise a gas impermeable material such as stainless steel, heat-resistant superalloy or molybdenum, selected according to the temperature used.

The following is a working example of the method of the present invention.

Example:

HIP treatment of a high speed powder compact was performed using the lower loading type modular HIP system illustrated in Figures 1 to 5. First, in an auxiliary station, the upper and lower valve mechanisms were opened and the internal pressure of the treatment chamber was brought to $10^{-1}$-$10^{-2}$ Torr by vacuum suction, then the interior atmosphere was replaced with argon gas, followed by a preliminary sintering at 1000°C for 1 hour in an argon atmosphere.

Then, the upper and lower valves 25 and 25' were closed to seal the argon gas in the treatment chamber 11, which was then loaded into the HIP furnace 5 whilst the workpiece was still hot. Then, the upper valve 25 was opened and argon gas was introduced from the conduit 40. At the same time, the heater 9 was switched on and the internal temperature and pressure of the treating chamber 11 were raised to 1400°C and 1000°C atm over a period of 3 hours. While maintaining the interior of the treatment chamber in this state for about 2 hours, the HIP treatment was performed. Thereafter, the power supply to the heater 9 was turned off and the lower valve 25' was opened to start cooling. In about one hour, the internal temperature of the HIP furnace lowered to about 400°C, whereupon the pressure was reduced and the argon gas recovered. The internal pressure was returned to normal pressure over a period of about one hour. At this time, the internal temperature of the HIP furnace was about 290°C. Then the upper and lower valves 25 and 25' were closed and the lower plug 8 was taken out together with the hermetic casings 16 and 17, heat insulating barrier 10 and workpiece 33, and together loaded again into the auxiliary station 4. When the internal temperature lowered to 200°C, the inner plug 8b was pulled out together with the workpiece 33. Molybdenum was used as the material of both the heater 9 and hermetic casings 16 and 17. Heating could be done stably without sublimation of molybdenum in both the preheating stage and HIP treatment stage, and no substantial oxidation was recognised even after opening to the outside air.

In the method and apparatus of the present invention, as set forth hereinabove, the HIP treatment is performed in the combination of the movable treatment chamber 11 with the HIP furnace 5, and after completion of the HIP treatment, a rapid cooling is effected by utilisation of a large convective heat conductivity induced by a vigorous convection of high pressure gas, then the treatment chamber 11 is taken out from the HIP furnace 5. Consequently, the damage and deterioration of the seal ring caused by opening of the furnace whilst at a high temperature, which is a safety impeding factor, is eliminated completely. Besides, since it is possible to preheat the workpiece 33 in an auxiliary station and load the preheated workpiece enclosed in a predetermined gas atmosphere in a hot state into the HIP furnace 5, not only is the heat-up time in the HIP furnace 5 shortened, but also the time inside the HIP furnace 5, especially the time required for lowering temperature, is shortened to a remarkable extent. As a result, the working efficiency of the entire modular type HIP system is improved remarkably, and hence not only is the cycle time shortened but also the cooling step which has heretofore been conducted over a long time in auxiliary stations can be carried out in an extremely shorter time. Consequently, the number of auxiliary stations for one HIP furnace can be reduced, it is not necessary to use a dedicated preheating furnace which is expensive, thus permitting a remarkable reduction of the equipment cost, and the loss of heat energy can be kept to a minimum.

Thus, the method and apparatus of the present invention have various advantages. The cycle time in the standard HIP treatment has heretofore been 15 hours and 20 minutes, while according to the present invention it is shortened to 8 hours and 20 minutes only through shortening of the temperature lowering time and is remarkably shortened to 7 hours if preheating is adopted at the same time. Particularly, in a HIP treatment at a high temperature region of 1200°C to 2000°C, a specially outstanding effect is exhibited, thus greatly contributing to the improvement of productivity in the HIP treatment.

**Claims**

1. A process for high efficiency hot isostatic pressing for sintering or densifying a ceramic or metallic workpiece (33) in a high temperature and high pressure gas atmosphere comprising mounting the workpiece (33) in a hermetic casing (17), preheating the workpiece (33) inside said hermetic casing (17) outside a high pressure vessel (6, 7, 8) prior to the hot isostatic pressing treatment, transferring the preheated workpiece (33) and hermetic casing (17) to the high pressure vessel (6, 7, 8), communicating the interior of the hermetic casing (17) with a high pressure gas atmosphere whereby the workpiece (33) is hot isostatically pressed at a high temperature and in a high pressure gas atmosphere, characterised in that the high pressure gas atmosphere is at least 5.07 x 10$^7$Pa (500 atmospheres), the workpiece (33) is convectively cooled whilst mounted in the hermetic casing (17) within the high pressure vessel (6, 7, 8) by causing said high pressure gas at a pressure of at least 5.07 x 10$^7$Pa (500 atmospheres) to circulate from within the hermetic casing (17) to a relatively cool portion of the high pressure vessel (6, 7, 8) outside the hermetic casing (17) and back within the hermetic casing (17), lowering the pressure within said vessel (6, 7, 8) and further cooling the workpiece (33) remote from the high pressure vessel (6, 7, 8) by removing the workpiece (33) from the high pressure vessel (6, 7, 8) whilst hermetically sealed in said hermetic casing (17).

2. A process according to claim 1, characterised in that said cooling of said workpiece by said high pressure gas is performed until the temperature of the workpiece drops to about 300°c.

3. An apparatus for high efficiency hot isostatic pressing for sintering or densifying a ceramic or metallic workpiece (33) in a high temperature and high pressure gas atmosphere comprising,

a hot isostatic pressing furnace (5) comprising a high pressure vessel (6, 7, 8) in the form of a vertical pressure-resistant cylinder (7) having one closed end (6) and a plug (8) removably closing an open other end of said cylinder (7); and

a treatment chamber (11) surrounded by a heat insulating barrier (10) and adapted to be loaded into and unloaded from said high pressure vessel (6, 7, 8) with a preheated workpiece (33) enclosed therein, said heat insulating barrier (10) being provided internally with a heater (9),

said hot isostatic pressing furnace (5) having a gas supply and discharge means (40) for isostatically pressing said workpiece (33) by subjecting it to a predetermined high temperature and high pressure treatment in a gas atmosphere,

said treatment chamber (11) including a hermetic casing (17) including valve means for providing communication between the interior and exterior of said treatment chamber (11),

characterised in that at least one openable and closable valve means (22, 23) is provided in each of the upper and lower portions of the treatment chamber (11) whereby whilst said treatment chamber (11) is being loaded into the high pressure vessel (6, 7, 8), it is hermetically sealed by maintaining all said valve means (22, 23) closed,

means being provided

to open at least one of said valve means (22, 23) whilst the treatment chamber (11) is in the furnace (5) whereby said high pressure gas is applied to said workpiece (33),

to thereafter open all said valve means (22, 23) after said hot pressing whilst the treatment chamber (11) is still in the furnace (5) whereby gas circulates from within the treatment chamber (11) to a relatively cool portion of the high pressure vessel (6, 7, 8) and back within the treatment chamber (11) to cool the workpiece (33) and

to thereafter close all of said valve means (22, 23) so that said treatment chamber (11) may be removed from said high pressure vessel (6, 7, 8) whilst maintaining said treatment chamber (11) hermetically closed.

4. An apparatus for hot isostatic pressing according to claim 3, characterised in that said high pressure vessel (6, 7, 8) has a closed upper end and a lower plug (8) removably closing an open lower end of said cylinder, said heat insulating barrier (10) is mounted on said lower plug (8); whereby said treatment chamber (11) is loaded into and unloaded from said high pressure vessel (6, 7, 8) from below the latter together with the workpiece (33) by attaching and detaching said lower plug (8) to and from the lower open end of said vertical pressure resistant cylinder (7).

5. An apparatus for hot isostatic pressing according to claim 4, characterised in that said lower plug (8) comprises an inner plug (8b) on which, in use, is mounted the workpiece (33) and an outer plug (8a) connected to said heat insulating barrier (10) and said heater (9), the inner plug (8b) being removably fitted in said outer plug (8a).

6. An apparatus for hot isostatic pressing according to claim 4 or claim 5, characterised in that the valve mechanism (23) provided in the lower portion of the treatment chamber (11) is provided in said lower plug (8).

7. An apparatus for hot isostatic pressing according to claim 5 characterised in that the valve mechanism (23) provided in the lower portion of the treatment chamber (11) is provided in said inner plug (8b).

8. An apparatus for hot isostatic pressing according to claim 3, characterised in that said high pressure vessel (6, 7, 8) has a closed lower end and an upper plug (6) removably closing an open upper end of said cylinder (7), and said treatment chamber (11) is mounted on a base plate (42) disposed at the bottom thereof wherein it may be loaded into and unloaded from said high pressure vessel (6, 7, 8) from above the latter together with said base plate (42).

9. An apparatus for hot isostatic pressing according to claim 8, characterised in that the valve mechanism (23) provided in the lower portion of the treatment chamber (11) is provided in said base plate (42).

10. An apparatus for high efficiency hot isostatic pressing for sintering or densifying a ceramic or metallic workpiece (33) in a high temperature and high pressure gas atmosphere in a modular type hot isostatic pressing system comprising:

a hot isostatic pressing furnace (5) comprising a high pressure vessel (6, 7, 8) comprising a vertical, pressure-resisting cylinder (7) having one closed end (6) and a plug (8) removable closing an open other end of said cylinder (7) and a treatment chamber (11) surrounded by a heat insulating barrier (10) and adapted to be loaded into and unloaded from said high pressure vessel (6, 7, 8) with a workpiece (33) enclosed therein, said heating insulating barrier (10) being provided internally with a heater (9); said hot isostatic pressing furnace (5) having a gas supply and discharge means (40) for isostatically pressing said workpiece (33) by subjecting it to a predetermined high temperature and high pressure treatment in a gas atmosphere;

an auxiliary station (4) substantially comprising a vertical cylinder (13) adapted so as, in use, to enclose therein and hermetically seal said treatment chamber (11), said auxiliary station (4) having a gas supply and discharge means (38); and a carrier apparatus (2) for carrying said treatment chamber (11) together with the workpiece (33) between said hot isostatic pressing furnace (5) and said auxiliary station (4) and loading and unloading it into and from the vertical cylinders (7, 13) of said furnace (5) and said auxiliary station (4),

said treatment chamber (11) is covered with a hermetic casing (17) and includes a valve mechanism capable of providing selective communication between the interior and exterior of said treatment chamber (11),

characterised in that there is provided at least one openable and closeable valve mechanism (22, 23) in each of upper and lower portions of the treatment chamber (11) whereby whilst said treatment chamber (11) is being loaded into the high pressure vessel (6, 7, 8), it is hermetically sealed by maintaining all said valve means (22, 23) closed,

means being provided

to open at least one of said valve means (22, 23) whereby said high pressure gas is applied to said workpiece (33) during hot pressing,

to open all said valve means (22, 23) after said hot pressing whilst the treatment chamber (11) is still in the furnace (5) whereby gas circulates from within the treatment chamber (11) to a relatively cool portion of the high pressure vessel (6, 7, 8) and back within the treatment chamber (11) to cool the workpiece (33) and

to thereafter close all of said valve means (22, 23) so that said treatment chamber (11) may be removed from said high pressure vessel (6, 7, 8) whilst maintaining said treatment chamber (11) hermetically closed.

11. An apparatus for hot isostatic pressing according to claim 10, characterised in that said high pressure vessel (6, 7, 8) has a closed upper end and a lower plug (8) removably closing an open lower end of said cylinder, said heat insulating barrier (10) is mounted on said lower plug (8), said vertical cylinder (13) of said auxiliary station (4) has a closed upper end and a lower open end portion which permits said lower plug (8) carrying thereon said treatment chamber (11) to be fitted and fixed therein, whereby said treatment chamber (11) together with the workpiece (33) may be loaded into and unloaded from said high pressure vessel (6, 7, 8) from below the vessel (6, 7, 8) and said auxiliary station (4) from below the station (4) by inserting and removing said lower plug (8) into and from the lower open ends of said vertical cylinders (7, 13).

12. An apparatus for hot isostatic pressing according to claim 11, characterised in that said lower plug (8) comprises an annular outer plug (8a) which mounts thereon said heat insulating barrier (10) and said heater (9), and an inner plug (8b) which is removably fitted in said outer plug (8a) and supports the workpiece (33).

13. An apparatus for hot isostatic pressing according to claim 11 or claim 12, characterised in that the valve mechanism (23) provided in the lower portion of the treatment chamber (11) is provided in said lower plug (3).

14. An apparatus for hot isostatic pressing according to claim 12, characterised in that the valve mechanism (23) provided in the lower portion of the treatment chamber (11) is provided in said inner plug (8b).

15. An apparatus for hot isostatic pressing according to claim 10, characterised in that said high pressure vessel (6, 7, 8) has a closed lower end and an upper plug (6) removably closing an opening at the upper end of said cylinder (7), said treatment chamber (11) is mounted on a base plate (42) disposed at the bottom thereof, said vertical cylinder (13) of said auxiliary station (4) has a closed lower end and an open upper end, whereby said treatment chamber (11), may be loaded into and unloaded from said high pressure vessel (6, 7, 8) and said auxiliary station (4) from above the vessel (6, 7, 8) and station (4) together with the workpiece (33).

16. An apparatus for hot isostatic pressing according to claim 15, characterised in that the valve mechanism provided in the lower portion of the treatment chamber (23) is provided in said base plate (42).

**Patentansprüche**

1. Verfahren zum hochwirksamen isostatischen Heißpressen, zum Sintern und Verdichten eines keramischen oder metallischen Werkstückes in einer Gasatmosphäre mit hoher Temperatur und hohem Druck, mit einem Lagern des Werkstückes (33) in einem hermetischen Gehäuse (17), einem Vorwärmen des Werkstückes (33) innerhalb des hermetischen Gehäuses (17) außerhalb eines Hochdruckgefäßes (6, 7, 8) vor der heißisostatischen Preßbehandlung, einem Überführen des vorgewärmten Werkstückes (33) und des hermetischen Gehäuses (17) zu dem Hochdruckgefäß (6, 7, 8) einem Verbinden des Innenraumes des hermetischen Gehäuses (17) mit einer Hochdruck-Gasatmosphäre, wodurch das Werkstück (33) bei einer Gasatmosphäre mit hoher Temperatur und hohem Druck heißisostatisch gepreßt wird, dadurch gekennzeichnet, daß die Hochdruck-Gasatmosphäre zumindest 5.07 x $10^7$ Pa (500 Atmosphären) aufweist, daß das Werkstück (33) konvektiv gekühlt wird, während es in dem hermetischen Gehäuse (17) in dem Hochdruckgefäß (6, 7, 8) gelagert ist, in dem das Hochdruck-Gas bei einem Druck von zumindest 5.07 x $10^7$ Pa (500 Atmosphären) vom Inneren des hermetischen Gehäuses (17) zu einem relativ kühlen Bereich des Hochdruckgefäßes (6, 7, 8) außerhalb des hermetischen Gehäuses (17) und wieder in das hermetische Gehäuse (17) zirkuliert wird, daß der Druck in dem Gefäß (6, 7, 8) erniedrigt wird und daß das Werkstück (33) außerhalb des Hochdruckgefäßes (6, 7, 8) durch Entfernen des Werkstückes (33) aus dem Hochdruckgefäß (6, 7, 8) weiter abgekühlt wird, während es hermetisch in dem hermetischen Gehäuse (17) eingeschlossen ist.

2. Verfahren nach Anspruch 1, dadurch gekennzeichnet, daß das Abkühlen des Werkstückes durch das Hochdruck-Gas durchgeführt wird, bis die Temperatur des Werkstückes auf ungefähr 300° C absinkt.

3. Vorrichtung zum hochwirksamen isostatischen Heißpressen, zum Sintern und Verdichten eines keramischen oder metallischen Werkstückes (33) in einer Gasatmosphäre mit hoher Temperatur und hohem Druck mit
    – einem isostatischen Heißpreßofen (5) mit einem Hochdruckgefäß (6, 7, 8) in Form eines vertikalen, druckbeständigen Zylinders (7) mit einem geschlossenen Ende (6) und einem Deckel (8), welcher lösbar ein offenes anderes Ende des Zylinders (7) verschließt, und
    – einer Behandlungskammer (11), welche von einer wärmeisolierenden Ummantelung (10) umgeben ist, und dazu geeignet ist, in das Hochdruckgefäß (6, 7, 8) eingebracht und aus diesem entfernt zu werden, während ein vorgewärmtes Werkstück (33) in dieser eingeschlossen ist, wobei die wärmeisolierende Ummantelung (10) im Innenbereich mit einer Heizung (9) versehen ist,

– wobei der isostatische Heißpreßofen (5) eine Gaszuführungs- und abgabeeinrichtung (40) zum isostatischen Pressen des Werkstückes (33) durch Aussetzen desselben einer vorbestimmten hohen Temperatur und einer Hochdruckbehandlung in einer Gasatmosphäre aufweist,

– wobei die Behandlungskammer (11) ein hermetisches Gehäuse (17) umfaßt, welches Ventileinrichtungen zur Ausbildung einer Verbindung zwischen dem Innenraum und dem Außenraum der Behandlungskammer (11) umfaßt,

dadurch gekennzeichnet, daß zumindest eine zu öffnende und zu schließende Ventileinrichtung (22, 23) in jedem der oberen und unteren Bereiche der Behandlungskammer (11) vorgesehen ist, wodurch während die Behandlungskammer (11) in das Hochdruckgefäß (6, 7, 8) geladen wird, diese durch Geschlossenhalten der Ventilmittel (22, 23) hermetisch abgedichtet ist,

– wobei Mittel vorgesehen sind

zum Öffnen von zumindest einem der Ventilmittel (22, 23), während die Behandlungskammer (11) in dem Ofen (5) ist, wodurch das Hochdruck-Gas auf das Werkstück (33) aufgebracht wird,

zum anschließenden Öffnen aller Ventilmittel (22, 23), nach dem Heißpressen, während die Behandlungskammer (11) sich noch in dem Ofen (5) befindet, wodurch Gas vom Inneren der Behandlungskammer (11) zu einem relativ kühlen Bereich des Hochdruckgefäßes (6, 7, 8) und zurück in die Behandlungskammer (11) zur Kühlung des Werkstückes (33) zirkuliert, und

zum nachfolgenden Schließen aller Ventilmittel (22, 23), so daß die Behandlungskammer (11) von dem Hochdruckgefäß (6, 7, 8) entfernt werden kann, während die Behandlungskammer (11) hermetisch geschlossen bleibt.

4. Vorrichtung zum isostatischen Heißpressen gemäß Anspruch 3, dadurch gekennzeichnet, daß das Hochdruckgefäß (6, 7,8) ein geschlossenes oberes Ende und einen unteren Deckel (8) aufweist, welcher lösbar ein offenes unteres Ende des Zylinders abschließt, wobei die wärmeisolierende Ummantelung (10) an dem unteren Deckel (8) gelagert ist, wodurch die Wärmebehandlungskammer (11) zusammen mit dem Werkstück (33) in das Hochdruckgefäß (6, 7, 8) von der Unterseite desselben durch Anbringen und Lösen des Deckels (8) an und von dem unteren offenen Ende des vertikalen druckbeständigen Zylinders (7) geladen und entladen wird.

5. Vorrichtung zum isostatischen Heißpressen gemäß Anspruch 4, dadurch gekennzeichnet, daß der untere Deckel (8) einen inneren Deckel (8b) umfaßt, an welchem, im Gebrauchszustand, das Werkstück (33) gelagert ist, sowie einen äußeren Deckel (8a), welcher mit der wärmeisolierenden Ummantelung (10) und der Heizung (9) verbunden ist, wobei der innere Deckel (8b) lösbar an dem äußeren Deckel (8a) angebracht ist.

6. Vorrichtung zum isostatischen Heißpressen gemäß Anspruch 4 oder 5, dadurch gekennzeichnet, daß der Ventilmechanismus (23), welcher in dem unteren Bereich der Behandlungskammer (11) vorgesehen ist, in dem unteren Deckel (8) vorgesehen ist.

7. Vorrichtung zum isostatischen Heißpressen gemäß Anspruch 5, dadurch gekennzeichnet, daß der Ventilmechanismus (23), welcher in dem unteren Bereich der Behandlungskammer (11) vorgesehen ist, in dem inneren Deckel (8b) vorgesehen ist.

8. Vorrichtung zum isostatischen Heißpressen nach Anspruch 3, dadurch gekennzeichnet, daß das Hochdruckgefäß (6, 7, 8) ein geschlossenes unteres Ende und einen oberen Deckel (6) umfaßt, welcher entfernbar ein oberes Ende des Zylinders (7) abschließt, und daß die Behandlungskammer (11) an einer Basisplatte (42) gelagert ist, welche an deren Boden angeordnet ist, wobei diese von oberhalb des letzteren zusammen mit der Basisplatte (42) in das Hochdruckgefäß (6, 7, 8) geladen und von diesem entladen werden kann.

9. Vorrichtung zum isostatischen Heißpressen gemäß Anspruch 8, dadurch gekennzeichnet, daß der Ventilmechanismus (23), welcher in dem unteren Bereich der Behandlungskammer (11) vorgesehen ist, in der Basisplatte (42) vorgesehen ist.

10. Vorrichtung zum isostatischen Heißpressen mit hohem Wirkungsgrad zum Sintern oder Verdichten eines keramischen oder metallischen Werkstückes (33) in einer Gasatmosphäre mit hoher Temperatur und hohen Druck in einem baukastenartigen isostatischen Heißpreß-System, mit:

– einem isostatischen Heißpreßofen (5), welcher ein Hochdruckgefäß (6, 7,8) umfaßt, mit einem vertikalen, druckbeständigen Zylinder (7), welcher ein geschlossenes Ende (6) und einen Deckel (8) umfaßt, welcher entfernbar ein anderes offenes Ende des Zylinders (7) verschließt, sowie eine Behandlungskammer (11), welche von einer wärmeisolierenden Ummantelung (10) umgeben ist, und geeignet ist, mit einem in diesem aufgenommenen Werkstück (33) in das Hochdruckgefäß (6, 7, 8) eingeladen und von diesem ausgeladen zu werden, wobei die wärmeisolierende Ummantelung im Inneren mit einer Heizung (9) versehen ist;

– wobei der isostatische Heißpreßofen (5) Gaszuführungsmittel und Gasleitungsmittel (40) zum statischen Pressen des Werkstückes (33) durch Aussetzen desselben einer Hochtemperatur- und Hochdruckbehandlung in einer Gasatmosphäre aufweist;

– einer Hilfsstation (4), welche einen im wesentlichen vertikalen Zylinder (13) umfaßt, welcher so angepaßt ist, daß er beim Gebrauch die Behandlungskammer in sich umschließt und hermetisch abdichtet, wobei die Hilfsstation (4) Gaszuführungs- und Gasabführungsmittel (38) umfaßt; sowie eine Trägervorrichtung (2) zum Tragen der Behandlungskammer (11) zusammen mit dem Werkstück (33) zwischen dem isostatischen Heißpreßofen (5) und der Hilfsstation (4) und zum Laden und Entladen desselben in und von den vertikalen Zylindern (7, 13) des Ofens (5) und der Hilfsstation (4),

– wobei die Behandlungskammer (11) mit einem hermetischen Gehäuse (19) bedeckt ist und einen Ventilmechanismus umfaßt, welcher zur wahlweisen Verbindung zwischen dem Inneren und dem Äußeren der Behandlungskammer (11) geeignet ist,

dadurch gekennzeichnet, daß zumindest ein zu öffnender und zu schließender Ventilmechanismus (22, 23) in jedem der oberen und unteren Bereiche der Behandlungskammer (11) vorgesehen ist, wodurch, während die Behandlungskammer (11) in das Hochdruckgefäß (6, 7, 8) geladen wird, diese durch Aufrechterhaltung aller dieser Ventilmittel (22, 23) im geschlossenen Zustand, hermetisch abgedichtet wird,

– wobei Mittel vorgesehen sind,
um zumindest eine der Ventileinrichtungen (22, 23) zu öffnen, wodurch Hochdruckgas während des Heißpressens auf das Werkstück aufgebracht wird,

um alle Ventilmittel (22, 23) nach dem Heißpressen zu öffnen, während die Behandlungskammer (11) noch in dem Ofen (5) ist, wodurch Gas vom Inneren der Behandlungskammer (11) zu einem relativ kühlen Bereich des Hochdruckgefäßes (6, 7, 8) und zurück in die Behandlungskammer (11) zirkuliert, um das Werkstück (33) zu kühlen, und

um nachfolgend alle Ventilmittel (22, 23) zu schliessen, so daß die Behandlungskammer (11) von dem Hochdruckgefäß (6, 7, 8) entfernt werden kann, während die Behandlungskammer (11) hermetisch geschlossen bleibt.

11. Vorrichtung zum isostatischen Heißpressen gemäß Anspruch 10, dadurch gekennzeichnet, daß das Hochdruckgefäß (6, 7, 8) ein geschlossenes oberes Ende und einen unteren Deckel (8) aufweist, welcher entfernbar ein offenes unteres Ende des Zylinders schließt, wobei die wärmeisolierende Ummantelung (10) an dem unterem Deckel (8) gelagert ist, wobei der vertikale Zylinder (13) der Hilfsstation (4) ein geschlossenes oberes Ende und einen offenen unteren Endbereich aufweist, welcher es ermöglicht, den unteren Deckel (8), welcher auf sich die Behandlungskammer (11) trägt, einzuführen und in diesem zu befestigen, wobei die Behandlungskammer (11) zusammen mit dem Werkstück (33) von der Unterseite des Gefäßes (6, 7, 8) in das Hochdruckgefäß (6, 7, 8) eingeladen und von diesem entladen werden kann, sowie in und von der Hilfsstation (4) von unterhalb der Station (4) durch Einführen und Entfernen des unteren Deckels (8) in und von den unteren offenen Enden der vertikalem Zylinder (7, 13).

12. Vorrichtung zum isostatischen Heißpressen gemäß Anspruch 11, dadurch gekennzeichnet, daß der untere Deckel (8) einen ringförmigen äußeren Deckel (8a) umfaßt, welcher auf sich die wärmeisolierende Ummantelung (10) und die Heizung (9) trägt, sowie einen inneren Deckel (8b), welcher entfernbar in den äußeren Deckel (8a) eingesetzt ist und das Werkstück (33) lagert.

13. Vorrichtung zum isostatischen Heißpressen gemäß Anspruch 11 oder 12, dadurch gekennzeichnet, daß der Ventilmechanismus (23), welcher in dem unteren Bereich der Behandlungskammer (11) vorgesehen ist, in dem unteren Deckel (3) angeordnet ist.

14. Vorrichtung zum isostatischen Heißpressen gemäß Anspruch 12, dadurch gekennzeichnet, daß der Ventilmechanismus (23), welcher in dem unteren Bereich der Behandlungskammer (11) vorgesehen ist, in dem innerem Deckel (8b) vorgesehen ist.

15. Vorrichtung zum isostatischen Heißpressen gemäß Anspruch 10, dadurch gekennzeichnet, daß das Hochdruckgefäß (6, 7, 8) ein geschlossenes unteres Ende und einen oberen Deckel (6) aufweist, welcher entfernbar eine Öffnung an dem oberen Ende des Zylinders verschließt, wobei die Behandlungskammer (11) an einer Basisplatte (42) gelagert ist, welche an deren Boden angebracht ist, wobei der vertikale Zylinder (13) der Hilfsstation (4) ein geschlossenes unteres Ende und ein offenes oberes Ende aufweist, wobei die Behandlungskammer (11) zusammen mit dem Werkstück (33) von oberhalb des Gefäßes (6, 7, 8) und der Station (4) in das Hochdruckgefäß (6, 7, 8) und die Hilfsstation (4) eingeladen und entladen werden kann.

**16.** Vorrichtung zum isostatischen Heißpressen gemäß Anspruch 15, dadurch gekennzeichnet, daß der Ventilmechanismus (23), welcher im unteren Bereich der Behandlungskammer (11) vorgesehen ist, in der Basisplatte (42) vorgesehen ist.

## Revendications

1) Procédé à haut rendement pour la compression isostatique à chaud, pour le frittage ou l'augmentation de la densité d'une pièce (33) en céramique ou en métal dans une atmosphère gazeuse sous haute pression et haute température, comprenant le montage de la pièce (33) dans un boîtier hermétique (17), le préchauffage de la pièce (33) tandis qu'elle est à l'intérieur dudit boîtier hermétique (17) à l'extérieur d'un récipient à haute pression (6,7,8) avant le traitement de compression isostatique à chaud, le transfert de la pièce préchauffée (33) et du boîtier hermétique (17) dans le récipient à haute pression (6,7,8), la mise en communication de l'intérieur du boîtier hermétique (17) avec une atmosphère gazeuse sous haute pression, la pièce (33) étant ainsi comprimée de façon isostatique à chaud dans une atmosphère gazeuse sous haute pression et haute température, caractérisé en ce que l'atmosphère gazeuse sous haute pression est au moins sous $5,07 \times 10^7$ Pa (500 atmosphères), la pièce (33) est refroidie par convection pendant qu'elle est montée dans le boîtier hermétique (17) à l'intérieur du récipient à haute pression (6,7,8) en mettant ledit gaz sous haute pression, au moins égale à $5,07 \times 10^7$ Pa (500 atmosphères), en circulation depuis l'intérieur du boîtier hermétique (17) vers une partie relativement froide du récipient à haute pression (6,7,8) à l'extérieur du boîtier hermétique (17) et en retour à l'intérieur de ce boîtier hermétique (17), la pression à l'intérieur dudit récipient (6, 7, 8) est abaissée et la pièce (33) est en outre refroidie à distance du récipient à haute pression (6,7, 8) en retirant cette pièce (33) du récipient à haute pression (6, 7, 8) alors qu'elle est maintenue de façon étanche dans ledit boîtier hermétique (17).

2) Procédé selon la revendication 1, caractérisé en ce que ledit refroidissement de ladite pièce par ledit gaz sous haute pression est effectué jusqu'à ce que la température de la pièce soit descendue à 300°C environ.

3) Dispositif pour la compression isostatique à chaud à haut rendement, pour le -frittage ou l'augmentation de la densité d'une pièce (33) en céramique ou en métal dans une atmosphère gazeuse sous haute pression et haute température, comportant :

    – un four de compression isostatique à chaud (5) constitué d'un récipient à haute pression (6, 7, 8) sous forme d'un cylindre vertical (7) résistant à la pression ayant une extrémité fermée (6) et un bouchon (8) qui ferme de façon amovible une autre extrémité, ouverte, dudit cylindre (7) ; et

    – une chambre de traitement (11) entourée par un barrage calorifuge (10) et adaptée à être chargée, avec une pièce préchauffée (33) enfermée à l'intérieur, dans ledit récipient à haute pression (6,7,8) et à en être déchargée, ledit barrage calorifuge (10) étant muni intérieurement d'un élément chauffant (9) ,

ledit four de compression isostatique à chaud (5) possédant des moyens (40) d'amenée et d'évacuation de gaz pour la compression isostatique de ladite pièce (33) en la soumettant à un traitement prédéterminé à haute pression et haute température dans une atmosphère gazeuse ,

ladite chambre de traitement (11) comprenant un boîtier hermétique (17) muni de moyens à soupape pour établir la communication entre l'intérieur et l'extérieur de ladite chambre de traitement (11) ,

caractérisé en ce qu'au moins un moyen à soupape (22, 23) pouvant être ouvert et fermé est prévu dans chacune des parties supérieure et inférieure de la chambre de traitement (11), ce qui fait que lorsque ladite chambre de traitement (11) est chargée dans le récipient à haute pression (6,7,8), elle est fermée hermétiquement en maintenant tous lesdits moyens à soupape (22,23) fermés,

des moyens étant prévus :

    – pour ouvrir au moins l'un desdits moyens à soupape (22, 23) pendant que la chambre de traitement (11) est dans le four (5), ledit gaz sous haute pression étant ainsi mis en action sur ladite pièce (33) ,

    – pour ouvrir ensuite tous lesdits moyens à soupape (22,23) après ladite compression à chaud alors que la chambre de traitement (11) est encore dans le four (5), ce qui fait que le gaz circule depuis l'intérieur de la chambre de traitement (11) vers une partie relativement froide du récipient à haute pression (6,7,8) et en retour à l'intérieur de la chambre de traitement (11) pour refroidir la pièce (33) et

    – pour fermer ensuite tous lesdits moyens à soupape (22, 23), de sorte que ladite chambre de traitement (11) puisse être retirée dudit récipient à haute pression (6, 7, 8) tandis que ladite chambre de traitement (11) est maintenue hermétiquement fermée.

4) Dispositif pour la compression isostatique à chaud selon la revendication 3, caractérisé en ce que ledit récipient à haute pression (6,7,8) comporte une extrémité supérieure fermée et un bouchon inférieur (8) fermant de façon amovible une extrémité inférieure ouverte dudit cylindre, ledit barrage calorifuge (10) étant monté sur ledit bouchon inférieur (8), ladite chambre de traitement (11) étant ainsi chargée dans le récipient à haute pression (6,7,8) et déchargée à partir de celui-ci par le dessous, conjointement avec la pièce (33), en fixant ledit bouchon inférieur (8) sur l'extrémité inférieure ouverte dudit cylindre vertical (7) résistant à la pression et en le retirant de cette ouverture.

5) Dispositif pour la compression isostatique à chaud selon la revendication 4, caractérisé en ce que ledit bouchon inférieur (8) comporte un bouchon intérieur (8b) sur lequel, en service, la pièce (33) est montée et un bouchon extérieur (8a) relié audit barrage calorifuge (10) et audit élément chauffant (9), le bouchon intérieur (8b) étant ajusté de façon amovible dans ledit bouchon extérieur (8a).

6) Dispositif pour la compression isostatique à chaud selon la revendication 4 ou la revendication 5, caractérisé en ce que le mécanisme à soupape (23) prévu dans la partie inférieure de la chambre de traitement (11) est disposé dans ledit bouchon inférieur (8).

7) Dispositif pour la compression isostatique à chaud selon la revendication 5, caractérisé en ce que le mécanisme à soupape (23) prévu dans la partie inférieure de la chambre de traitement (11) est disposé dans ledit bouchon intérieur (8b).

8) Dispositif pour la compression isostatique à chaud selon la revendication 3, caractérisé en ce que ledit récipient à haute pression (6,7,8) comporte une extrémité inférieure fermée et un bouchon supérieur (6) fermant de façon amovible une extrémité supérieure ouverte dudit cylindre (7), et ladite chambre de traitement (11) est montée sur une plaque de base (42) disposée à sa partie inférieure, cette chambre pouvant ainsi être chargée dans ledit récipient à haute pression (6,7,8) et en être déchargée à partir du haut de ce dernier conjointement avec ladite plaque de base (42).

9) Dispositif pour la compression isostatique à chaud selon la revendication 8, caractérisé en ce que le mécanisme à soupape (23) prévu dans la partie inférieure de la chambre de traitement (11) est disposé dans ladite plaque de base (42).

10) Dispositif pour la compression isostatique à chaud à haut rendement, pour le frittage ou l'augmentation de la densité d'une pièce (33) en céramique ou en métal dans une atmosphère gazeuse sous haute pression et haute température dans une installation de compression isostatique à chaud de type modulaire, comportant :
– un four de compression isostatique à chaud (5) muni d'un récipient à haute pression (6,7,8) constitué d'un cylindre vertical (7) résistant à la pression ayant une extrémité fermée (6) et un bouchon amovible (8) fermant une autre extrémité, ouverte, dudit cylindre (7), et d'une chambre de traitement (11) entourée par un barrage calorifuge (10) et adaptée à être chargée, avec une pièce (33) enfermée à l'intérieur, dans ledit récipient à haute pression (6,7,8) et à en être déchargée, ledit barrage calorifuge (10) étant muni intérieurement d'un élément chauffant (9), ledit four de compression isostatique à chaud (5) comportant des moyens (40) d'amenée et d'évacuation de gaz pour la compression isostatique de ladite pièce (33) en la soumettant à un traitement prédéterminé à haute pression et haute température dans une atmosphère gazeuse,
– un poste auxiliaire (4) comportant essentiellement un cylindre vertical (13) consituté pour entourer et fermer hermétiquement, en service, ladite chambre de traitement (11), ledit poste auxiliaire (4) étant muni de moyens (38) d'amenée et d'évacuation de gaz , et un appareil transporteur (2) pour transporter ladite chambre de traitement (11) conjointement avec la pièce (33) entre ledit four de compression isostatique à chaud (5) et ledit poste auxiliaire (4) et pour la charger dans les cylindres verticaux (7,13) dudit four (5) et dudit poste auxiliaire (4) et pour l'en décharger,

ladite chambre de traitement (11) étant couverte par un boîtier hermétique (17) et comprenant un mécanisme à soupape apte à établir une communication sélective entre l'intérieur et l'extérieur de ladite chambre de traitement (11),

caractérisé en ce qu'il est prévu au moins un mécanisme à soupape (22,23) dans chacune des parties supérieure et inférieure de la chambre de traitement (11), ce qui fait que lorsque ladite chambre de traitement (11) est chargée dans le récipient à haute pression (6,7,8), elle est fermée hermétiquement en maintenant tous lesdits moyens à soupape (22,23) fermés,

des moyens étant prévus
– pour ouvrir au moins l'un desdits moyens à soupape, ledit gaz sous haute pression étant ainsi mis en action sur ladite pièce (33) pendant la compression à chaud ,
– pour ouvrir tous lesdits moyens à soupape (22,23) après ladite compression à chaud alors que la chambre de traitement (11) est encore dans le four (5), ce qui fait que le gaz circule depuis l'intérieur de la chambre de traitement (11) vers une partie relativement froide du récipient à haute pression (6,7,8) et en retour vers l'intérieur de la chambre de traitement (11) pour refroidir la pièce (33) et
– pour fermer ensuite tous lesdits moyens à soupape (22, 23), de sorte que ladite chambre de traitement (11) puisse être retirée dudit récipient à haute pression (6, 7, 8) tandis que ladite chambre de traitement (11) est maintenue hermétiquement fermée.

11) Dispositif pour la compression isostatique à chaud selon la revendication 10, caractérisé en ce que ledit récipient à haute pression (6,7,8) comporte une extrémité supérieure fermée et un bouchon inférieur (8) fermant de façon amovible une extrémité inférieure ouverte dudit cylindre, ledit barrage calorifuge (10) étant monté sur ledit bouchon inférieur (8), ledit cylindre vertical (13) dudit poste auxiliaire (4) comportant une extrémité supérieure fermée et une partie d'extrémité inférieure ouverte qui permet d'y ajuster et d'y fixer ledit bouchon inférieur (8) portant ladite chambre de traitement (11), ce qui fait que ladite chambre de traitement (11) peut, conjointement avec la pièce (33), être chargée dans ledit récipient à haute pression (6,7,8) par le dessous de ce récipient (6,7,8) et dans ledit poste auxiliaire (4) par le dessous de ce poste (4) et être déchargée ainsi du récipient et du poste, en introduisant ledit bouchon inférieur (8) dans les extrémités inférieures ouvertes desdits cylindres verticaux (7,13) et en retirant ce bouchon desdites extrémités.

12) Dispositif pour la compression isostatique à chaud selon la revendication 11, caractérisé en ce que ledit bouchon inférieur (8) comporte un bouchon extérieur annulaire (8a) sur lequel est monté ledit barrage calorifuge (10) avec ledit élément chauffant (9), et un bouchon intérieur (8b) qui est ajusté de façon amovible dans ledit bouchon extérieur (8a) et qui porte la pièce (33).

13) Dispositif pour la compression isostatique à chaud selon la revendication 11 ou la revendication 12, caractérisé en ce que le mécanisme à soupape (23) prévu dans la partie inférieure de la chambre de traitement (11) est disposé dans ledit bouchon inférieur (8).

14) Dispositif pour la compression isostatique à chaud selon la revendication 12, caractérisé en ce que le mécanisme à soupape (23) prévu dans la partie inférieure de la chambre de traitement (11) est disposé dans ledit bouchon intérieur (8b).

15) Dispositif pour la compression isostatique à chaud selon la revendication 10, caractérisé en ce que ledit récipient à haute pression (6,7,8) comporte une extrémité inférieure fermée et un bouchon supérieur (6) fermant de façon amovible une ouverture à l'extrémité supérieure dudit cylindre (7), ladite chambre de traitement (11) étant montée sur une plaque de base (42) disposée à sa partie inférieure, ledit cylindre vertical (13) dudit poste auxiliaire (4) comportant une extrémité inférieure fermée et une extrémité supérieure ouverte, ladite chambre de traitement (11) pouvant ainsi, conjointement avec la pièce (33) être chargée dans ledit récipient à haute pression (6,7,8) et dans ledit poste auxiliaire (4) par le dessus du récipient (6,7,8) et du poste (4) et être déchargée ainsi dudit récipient et dudit poste.

16) Dispositif pour la compression isostatique à chaud selon la revendication 15, caractérisé en ce que le mécanisme à soupape prévu dans la partie inférieure de la chambre de traitement (23) est disposé dans ladite plaque de base (42).

F I G. 1

# F I G. 2

# F I G . 3

# F I G. 4

# F I G. 5

F I G. 6